Europäisches Patentamt

European Patent Office

Office européen des brevets

(11) Veröffentlichungsnummer: **0 090 091**
**B1**

(12) **EUROPÄISCHE PATENTSCHRIFT**

(45) Veröffentlichungstag der Patentschrift:
04.12.85

(21) Anmeldenummer: **82111844.5**

(22) Anmeldetag: **20.12.82**

(51) Int. Cl.⁴: **C 05 F 11/00**, A 01 G 1/00

(54) Verfahren zur Beschleunigung der Verrottung von Stroh und anderen Ernterückständen sowie deren Inkorperierung in die organische Bodensubstanz bei gleichzeitiger Förderung der Bodenaktivität.

(30) Priorität: **27.03.82 DE 3211330**

(43) Veröffentlichungstag der Anmeldung:
**05.10.83 Patentblatt 83/40**

(45) Bekanntmachung des Hinweises auf die Patenterteilung:
**04.12.85 Patentblatt 85/49**

(84) Benannte Vertragsstaaten:
**AT BE CH DE FR GB IT LI LU NL**

(56) Entgegenhaltungen:
**EP - A - 0 009 733**
**DE - A - 1 301 980**
**DE - A - 2 901 819**

(73) Patentinhaber: **Epandage-Vinasse-Ausbringungs-GmbH, Viktoriastrasse 8, D-6800 Mannheim 1 (DE)**

(72) Erfinder: **Lewicki, Wilhelm, Viktoriastrasse 8,
D-6800 Mannheim 1 (DE)**
Erfinder: **Debruck, Jürgen, Dr., Ebsdorfergrund 4,
D-3557 Rauisch-Holzhausen (DE)**
Erfinder: **Deleplanque, Gérard, 35 bis, Rue des Canus,
F-78600 Maisons Laffitte (FR)**
Erfinder: **Jahn-Held, Wilhelm W., Dr. Dr.-Ing., Schöne
Aussicht 8, D-3513 Staufenberg-1 (DE)**

(74) Vertreter: **Jahn-Held, Wilhelm W. Dr.Dr.-Ing. Dipl.-Chem.
et al, Schöne Aussicht 8,
D-3513 Staufenberg-Landwehrhagen (DE)**

**0 090 091**

**Beschreibung**

Im zeitgemäßen Intensivpflanzenbau werden in steigendem Maße durch Erweiterung des Getreideanbaues nach der Ernte Stroh und Stoppelfelder, insbesondere aus Getreidestoppeln, erzeugt.

Die Förderung einer raschen Verrottung der Ernterückstände durch Abbau der Hemizellulose und Zellulose ist eine Aufgabe von volkswirtschaftlicher Bedeutung, da die erzeugten Strohmengen nicht mehr innerbetrieblich recyclisiert werden können. Auch die Verbrennung auf dem Ackerboden ist im Hinblick auf die Umweltbelastung unerwünscht und führt neben der allgemeinen Gefährdung zur Schädigung des mikrobiellen Bodenlebens.

Auch das direkte Unterpflügen des Strohes und der Strohstoppeln ist keine Lösung dieses Problems. Es entstehen dadurch bei der Wiederholung des Einbringens in den Ackerboden Bearbeitungsschwierigkeiten. Es wird auch durch die nur sehr langsame Verrottung die Bodenfruchtbarkeit und die Ertragsbildung herabgesetzt.

Der Abbau organischer Dünger im Boden durch mikrobielle Umsetzungsprozesse und die teilweise Überführung in Bodenhumus setzt eine starke Vermehrung der Mikroorganismen voraus. Dazu wird auf Trolldenier, 1970, Bodenbiologie, Franck'sche Verlagshandlung, Stuttgart, verwiesen.

Die Auswirkungen dieser Umsetzungsprozesse sind als bodenbiologische Faktoren eine verstärkte Bodenatmung und damit Gasaustausch, aber auch verstärkte Schleimabsonderung und damit Verbesserung der Krümelbildung bzw. Krümelverklebung.

Durch Förderung der Bodenaktivität werden auch physikalische Faktoren verbessert, wie die vermehrte Krümelbildung und Krümelstabilität und damit verbesserte Bodenstruktur. Dazu gehören auch chemische Faktoren, wie die langsame Freisetzung der in organisch-gebundener Form vorliegenden Nährstoffe sowie der Abbau der organischen Substanz und deren Umsetzung zu stabilen Humusformen, die zu verfügbaren Nährstofformen führt.

Dazu gehört der Begriff der Nährstoffdynamik, also die Fähigkeit, die Kulturpflanzen während der Vegetationszeit entsprechend ihrem spezifischen Bedarf ausreichend mit Nährstoffen zu versorgen. Die Förderung der Bodenaktivität hängt also eng mit der Verbesserung von Faktoren der Bodenfruchtbarkeit zusammen.

Die Erfindung betrifft als Aufgabe ein Verfahren zur Beschleunigung der Verrottung von Stroh und anderen Ernterückständen sowie deren Inkorporierung in die organische Bodensubstanz bei gleichzeitiger Förderung der Bodenaktivität. Diese Aufgabe ist im Oberbegriff des Patentanspruches 1 definiert.

Für die langfristige Erhaltung des Humusgehaltes intensiv genutzer Ackerbaustandorte ist eine mehrfach wiederholte Strohzufuhr als organische Masse, wichtig. Diese Forderung gilt insbesondere für landwirtschaftliche Betriebe, in denen kein Stallmist als organischer Dünger mehr erzeugt wird sowie für aride Klimagebiete. Hinzu kommen Weinbaubetriebe, die zur Erosionsminderung und Humusanreicherung verstärkten Strohmulch zwischen den Zeilen verwenden und um dessen mikrobiellen Abbau sie bemüht sein müssen. Alle genannten Betriebe dürften derzeit bereits etwa 60%, auf die gesamte Ackerfläche des Landes bezogen, ausmachen.

Nun besteht aber die Problematik, daß bei der Zufuhr organischer Masse in Form von Stroh und anderen Ernterückständen, dieselben nicht innerhalb eines Jahres abgebaut werden, wenn bereits im folgenden Anbaujahr erneute Strohmengen dem Ackerboden zugeführt werden. Es ist eine Aufgabe des Verfahrens der Erfindung, diese ackerbauliche Schwierigkeit zu überwinden und die Strohrotte zu beschleunigen. Die Lösung der Aufgabe der Erfindung ist im kennzeichnenden Teil des Patentanspruches 1 definiert.

Der technische Effekt des Verfahrens der Erfindung besteht also darin, daß dieses dem Ackerboden eine Kombination von organischen Stoffen zuführt, die aus langsam und stetig wirkenden organisch-gebundenen N-Verbindungen als N-Ausgleich zur Einengung des weiten C/N-Verhältnisses der zugeführten Ernterückstände und Stroh führen und aus N-freien organischen Verbindungen, die als C- und Energiequelle für Mikroorganismen des bakteriellen Bodenlebens wirken. Sofern in der wäßrigen Lösung eine dieser beiden Stoffe in der Kombination fehlt, wird überraschend die Lösung der Aufgabe der Erfindung, nämlich die Beschleunigung der Verrottung von Stroh und anderen Ernterückständen und die Förderung der Bodenaktivität durch die geringere Komplexwirkung reduziert bzw. eingeschränkt.

Durch die Umsetzungsprozesse der Mikroorganismen wird durch die ausgewählte Kombination der Stoffe das weite C/N-Verhältnis der Strohmasse von etwa 100 bis 150 : 1 auf das enge C/N-Verhältnis von 10 bis 12 : 1 biologisch verengt und damit diese Aufgabe der Erfindung gelöst.

Nach dem Stand der Technik soll zur Lösung dieser Aufgabe dem Ackerboden mineralischer Stickstoff zugeführt werden, welcher die Pflanzenerträge beträchtlich erhöht.

Diese jährlichen N-Gaben müssen aber durch organisch-gebundene N-Quellen ergänzt werden, um die Aufgabe der Erfindung zu lösen.

Zur mineralischen N-Düngung wird auf v. Boguslawski und Debruck, 1977, Strohdüngung und Bodenfruchtbarkeit in Arbeiten der DLG, Band 155, DLG-Verlag, verwiesen.

Es hat sich jedoch in der Praxis herausgestellt, daß alleinige Gaben mineralischer N-Düngemittel, insbesondere auf umsetzungsträgen Standorten und zwar auf leichten, trockenen, wie auf schweren Böden, für einen raschen und optimalen Strohabbau nicht ausreichend sind. Es ist Aufgabe der Erfindung, diese »Lücke« zu schließen und auch auf solchen Standorten die Beschleunigung der Strohrotte durch Verengung des C/N-Verhältnisses unter Förderung der Bodenaktivität herbeizuführen.

Es möge unter dieser Förderung der Bodenaktivität auch die Verbesserung und Erhaltung der Bodenfruchtbarkeit verstanden sein.

Diese ist in einer allgemeinen Definition die Summe der biologischen, physikalischen, chemischen Bodeneigenschaften in ihrem positiven und nachhaltigem Einfluß auf die Entwicklung und den Ertrag der Kulturpflanzen. Dieser Begriff der Bodenfruchtbarkeit kann auch als das Transformationsvermögen des Bodens aufgefaßt werden, den Kulturpflanzen während der Vegetationszeit in ihren Ansprüchen an diese biologischen, physikalischen und chemischen Parameter zu genügen. Die Lösung der Aufgabe der Erfindung ist auch als alternative und bevorzugte Ausgestaltung in den Unteransprüchen definiert. Das C/N-Verhältnis wird in den Böden West-Europas durchschnittlich mit 10 bis 12 : 1 beurteilt. Dieses Verhältnis kann durch das weite Verhältnis der Strohmasse langläufig geändert werden, wenn dieses dem Ackerboden zunehmend zugeführt wird.

Dieses weite C/N-Verhältnis beträgt beispielsweise bei Getreidestroh 100 bis 150 : 1 und bei Rapsstroh noch etwa 70 : 1.

Bekannte organische Stoffe weisen beispielsweise folgende C/N-Verhältnisse auf: Stallmist 20 : 1, Rübenblatt und Gründüngung 20 : 1, Maisstroh 40 : 1.

Die genannten Stroharten, insbesondere aber das Getreidestroh, sind aufgrund ihrer Inhaltsstoffe (N) nicht in der Lage, selbsttätig ihr C/N-Verhältnis dem des Ackerbodens anzupassen. Es kommt zwar im Boden zum Substanzabbau, aber nicht zur Beschleunigung der Strohrotte und anderer Ernterückstände mit weitem C/N-Verhältnis im Sinne der Lehre des Verfahrens der Erfindung.

Dieser mikrobielle Abbau der organischen Stoffe, wie auch der Strohmasse wird durch die Veratmung von $CO_2$ erfaßt, die das C/N-Verhältnis der organischen Stoffe dem der Bodensubstanz anpaßt.

Diese Bodenatmung setzt die hohe und gleichbleibende Bodenaktivität voraus. Dieser biologische Effekt im Ackerboden wird durch das Verfahren der Erfindung gefördert.

Zur Lösung der Aufgabe der Erfindung wird auf die Stoppelfelder bzw. geräumte Feldschläge und auf gegebenenfalls darauf praktisch gleichmäßig verteiltes Stroh nach Möglichkeit noch vor der mischenden Einarbeitung in die Ackerkrume durch Bodenbearbeitungsgeräte eine pumpfähige, wäßrige Lösung mit einem Gehalt an 10 bis 80 Gew.-% Trockenmasse und 20 bis 90 Gew.-% Wasser durch Bedüsen mittels Spritzgerät als Spritzfilm oder Spritzschleier gleichmäßig verteilt aufgebracht. Das Verfahren der Erfindung versteht unter »Spritzfilm« die Verteilung in Form feinster Tröpfchengröße mit dadurch hoher Benetzbarkeit des Strohes und des Bodens.

Sofern die wäßrige Lösung eine gewisse Viskosität aufweist, entsteht ein »Spritzschleier«, dessen Tröpfchen sich erst bei Kontakt mit dem Stroh oder dem Ackerboden verteilen bzw. erst gebildet werden. Die Form des Ausbringens der wäßrigen Lösung gemäß dem Verfahren der Erfindung führt also zu dem gleichen und gewünschten Ergebnis in bezug auf den technischen Effekt ihrer Wirkung.

Das nach dem Verfahren gemäß der Erfindung auszubringende Stoffgemisch stellt eine erfinderische Auswahl dar. Die Trockenmasse der wäßrigen Lösung besteht aus 60 bis 85 Gew.-% organischer Masse und 15 bis 40 Gew.-% anorganischen Stoffen und die organische Masse aus 1,5 bis 11,5 Gew.-% N in Form langsam, stetig verfügbaren organisch gebundenen N-Verbindungen als N-Ausgleich zur Einengung des weiten C/N-Verhältnisses der zugeführten Ernterückstände, insbesondere Stroh, und 25 bis 50 Gew.-% N-freien organischen Verbindungen als mikrobielle C- und Energiequelle sowie aus 1,5 bis 18,5 Gew.-% reduzierenden Zuckern als Glucose und die anorganische Masse aus K-, Na-, Mg-, Ca- und P-Verbindungen besteht zur Beschleunigung der Verrottung und Förderung der Bodenaktivität. Erst die Kombination dieser Komponenten und ihr ausgewähltes Verhältnis führen also zur Lösung der Aufgaben der Erfindung. Zu dieser ausgewählten Kombination der Stoffe gehören aber auch solche Ionen, die den Prozeß der biologischen Umsetzung fördern. Die Trockenmasse nach dem Verfahren der Erfindung enthält die mikrobiellen Nährstoffe in Form der K-, Na-, Mg-, Ca- und P-Ionen. Diese Ionen liegen aufgrund der mineralischen Düngung in sulfatischer Bindung vorzugsweise vor. Es ist jedoch die Anwesenheit der organischen Bindung und Freisetzung aus der mikrobiellen Umsetzung der Trockenmasse nach dem Verfahren gemäß der Erfindung ebenso möglich und vorteilhaft.

Diese wäßrige Lösung wird nach dem Verfahren gemäß der Erfindung in die obere Ackerkrume eingearbeitet oder diese dringt nach dem Ausbringen in die Poren und Kapillaren des Ackerbodens ein. Es erfolgt dadurch die Benetzung der Strohmasse und die mikrobielle Umsetzung, welche die Beschleunigung der Strohverrottung bewirkt und die Bodenaktivität erhöht.

Eine bevorzugte Form der pumpfähigen, wäßrigen Lösung nach dem Verfahren der Erfindung ist Gegenstand des Patentanspruchs 2.

Diese wäßrige Lösung ist ein aufbereitetes Produkt organischer Herkunft aus dem pflanzlichen Leben der Natur. Diese Ausführung der pumpfähigen, wäßrigen Lösung gemäß dem Verfahren der Erfindung weist eine optimale, bevorzugte Zusammensetzung der Kombination der »Wirkstoffe« auf. Diese Stoffkombination enthält langsam und stetig verfügbaren, organisch gebundenen Stickstoff, sowie Zucker in Form von Invertzucker als C- und Energiequelle und anorganische Nährstoffe in Form ihrer löslichen Salze, deren Gehalt auf die Oxydform bezogen ist.

3

# 0 090 091

Diese bevorzugte Form der wäßrigen Lösung gemäß dem Verfahren der Erfindung bewirkt eine optimale Beschleunigung der Strohverrottung in der Ackerkrume in Gegenwart von Bodenfeuchtigkeit und Bodenbelüftung durch die Atmosphäre.

Es sind auch andere Verhältnisse dieser Zusammensetzung gemäß dem Verfahren der Erfindung in dieses eingeschlossen oder von diesem patentrechtlich abhängig. Diese liegen beispielsweise bei der Herkunft von Vinassen aus der Verarbeitung von Rohrmelassen und/oder anderen zuckerhaltigen Agrarrohstoffe und Nebenprodukten wie z. B. auch die Zuckerrübe. Die bevorzugte Form wird jedoch durch Eindickung von Zuckerrübenmelasseschlempe und/oder Mischungen von dieser mit Rohrmelasseschlempen (LPCV) im Gegensatz zu MPCV (Zuckerrübenmelasseschlempe) erzeugt. Die Gewichtsprozente der Stoffe in der wäßrigen Lösung beziehen sich auf diese Lösung als Summe der Komponenten.

Die wäßrige Lösung gemäß dem Verfahren der Erfindung hat beispielsweise in bevorzugten Formen als Naturprodukt auf Basis von ganz oder teilweise entzuckerter Melasse folgende Zusammensetzung:

| Analysen in den Stoffverbindungen | Gruppe A Typ LPCV*) % | Gruppe B Typ MPCV*) % | Gruppe C Typ HPCV*) % |
|---|---|---|---|
| organische Masse | 60—70 | 65—85 | 65—85 |
| Gesamtstickstoff N nach Kjeldahl | 1,5—3,5 | 3,6—7 | 7,1—12,5 |
| davon $NH_4$—N | — | — | 3,5—4,5 |
| N-freie org. Verbindungen | 41—50 | 40—50 | 30—40 |
| Red. Zucker als Glucose | 10—18 | 4,5—10 | 4,5—11 |
| anorg. Masse als K-, Na-, P-, Ca-, Mg-Ionen | 30—40 | 15—35 | 15—35 |
| $K_2O$ Gehalt davon | 7,5—9 | 7—13,5 | 1,5—5 |
| $P_2O_5$ | 0,25—0,35 | 0,20—0,75 | 0,15—0,30 |

*) LPCV — Low Protein Containing Vinasses
*) MPCV — Middle Protein Containing Vinasses
*) HPCV — High Protein Containing Vinasses

Die wäßrige Lösung gemäß dem Verfahren der Erfindung weist also ein enges C/N-Verhältnis vorzugsweise von 3 bis 4 : 1 aus der Gruppe B (MPCV) auf.

Die beispielsweisen Typen unterscheiden sich in ihrer Zusammensetzung bei vergleichbarer Wirkung. Ein wesentlicher Unterschied liegt mit in den pH-Werten, der aus der Aufbereitung resultiert.

Es kann die wäßrige Lösung mit hohem pH-Wert auf physiologisch saure und die mit niedrigem pH-Wert auf basische Standorte ausgebracht werden. Die wäßrige Lösung gemäß dem Verfahren der Erfindung hat damit eine umfassende Anwendungsbreite in der Praxis.

Da der Melasseentzuckerungs- und melasseverarbeitenden Fermentationsindustrie das Ableiten der Abwässer (Melassedünnschlempe) in Flüsse seit Einführung des Abwasserabgabengesetzes nicht mehr gestattet ist und die Aufbereitung in kommunalen Kläranlagen in der Zukunft zu teuer wird, wurde durch Recycling der Abwässer und stufenweise Eindickung ein neues Produkt, nämlich die eingedickten Melasse-Fermentationsabläufe bzw. Dickschlempe oder wie es im handelsüblichen Sinne heißt »Vinasse« produziert, die teilweise bei hoher Eindickung im Mischfuttersektor als Einzelfutter und als Melasseersatz für Wiederkäuer Verwendung findet.

Im Blick auf die zunehmende Herstellung von Bioalkohol aus Melasse und anderen landwirtschaftlichen Produkten und Nebenprodukten, wird in der Zukunft mit einem weit größeren Anfall und damit mit Vinasse-Absatzproblemen zu rechnen sein. Darüber hinaus wird der hohe Energieaufwand zur Eindickung von etwa 5% auf etwa 65% Trockensubstanz (TS) der Vinasse zu Qualitäten führen mit energiesparendem, niedrigem Gehalt an Trockensubstanz, die nicht im Futtersektor eingesetzt werden können. Dafür bietet sich nach dem Verfahren der Erfindung der Einsatz der wäßrigen Lösung gemäß Patentanspruch 1 und von ausgewählten Typen von Vinassen nach Anspruch 2 an zur Lösung der Aufgabe der Erfindung zur Beschleunigung der Verrottung von Stroh und anderen Ernterückständen und deren Inkorperierung in die organische Bodensubstanz bei gleichzeitiger Förderung der Bodenaktivität.

4

Das Verfahren der Erfindung gestattet damit zugleich, der traditionellen Forderung der Agrarwissenschaft zu entsprechen und nach Justus von Liebig von Äckern wider zuzuführen, was diesen an Nährstoffen entzogen wird.

Die Agrarchemie befaßt sich mit der Herstellung und Vewendung von langsam wirkenden Nährstoffen. Diese sind in Form der synthetisierten Verbindungen $NH_4MgPO_4$ oder $KMgPO_4 \cdot H_2O$ aus den DE-C-1 252 210, 1 592 803, 1 266 317 bekannt. Es sind auch organisch gebundene, langsam wirkende Stoffe, wie K-Alginat oder K-Monocarboxylcellulose aus der DE-C-1 301 980 bekannt.

Es sind in der Agrarchemie auch organisch gebundene, synthetische, langsam wirkende Verbindungen bekannt. Die DE-C-1 081 482 schlägt die Verwendung von Crotonylidenharnstoff als langsam wirkende N-Verbindung vor. Diese bekannten Nährstoffe haben die Aufgabe der Erfindung, die Beschleunigung der Verrottung von Stroh und anderen Ernterückständen im Kreislauf des Pflanzenanbaus nicht nahegelegt. Diese Nährstoffe sollen der Erhöhung der Pflanzenerträge dienen. Diese Stoffe führen gerade zur Vergrößerung der Strohmengen im Anbau von Getreide, Mais, Raps. Das Verfahren gemäß der Erfindung setzt also gerade dort an, wo die bekannten Nährstoffe erhöhte Mengen an Pflanzenrückständen in Form von Stroh erzeugen.

Die bekannten, chemisch synthetisierten Verbindungen haben auch nicht die Zusammensetzung der Stoffe in der wäßrigen Lösung gemäß dem Verfahren der Erfindung und weisen in ihrer Formulierung auch nicht die Kombination der Zusammensetzung des Verfahrens gemäß der Erfindung auf.

Erst die Lehre des Verfahrens der Erfindung, der Kombination von organisch gebundenen N-Verbindungen mit N-freien Kohlenhydraten führt zur Beschleunigung der Verrottung von Stroh in der Ackerkrume. Dies liegt offenbar daran, daß diese Kombination von, während der gesamten Vegetationsperiode vorhandenen, langsam fließenden N-Verbindungen mit für mikrobielle Umsetzungsprozesse zur Verfügung stehende C- und Energiequellen überraschend die Beschleunigung der Strohrotte bewirken.

Wenn auch den Pflanzennährstoffen in der wäßrigen Lösung gemäß dem Verfahren der Erfindung nur eine ergänzende Wirkung zu den mineralischen Nährstoffen zukommt, so ist es für die Anwendung des Verfahrens der Erfindung notwendig, diese Nährstoffmengen zu kennen. Sie resultieren aus der durch Versuche zu empfehlenden Aufwandmenge von 2,5—3,5 t/ha berechnet auf 65% Trockenmasse je nach Bodenart und Strohanteil/ha. Die Mikroflora und Mikrofauna ist also durch die Kombination der »Wirkstoffe« der Zusammensetzung der pumpfähigen, wäßrigen Lösung gemäß dem Verfahren der Erfindung optimal angeregt und bewirkt dadurch die rasche Verrottung des Strohs und anderer Ernterückstände. Das Verfahren gemäß der Erfindung bewirkt mit dem Aufdüsen der pumpfähigen, wäßrigen Lösung demnach eine Aktivierung des biologischen Bodenlebens. Es wird dadurch eine nachhaltige Verbesserung von Faktoren der Bodenfruchtbarkeit, insbesondere bei der Wiederholung des Aufbringens der wäßrigen Lösung gemäß dem Verfahren der Erfindung erreicht.

Nach dem Verfahren gemäß der Erfindung bewirkt die Zusammensetzung der wäßrigen Lösung eine Vermehrung der Bodenbakterien, Pilze und Aktinomyceten. Außerdem bewirkt diese Zusammensetzung der »Trockenmasse« eine Verbesserung der Mineralisierung des organisch gebundenen Stickstoffs zu $NH_4$- und daraus zu $NO_3$-Stickstoff, der bei der Verrottung des Strohs und während des Wachstums des folgenden Anbaues von Kulturpflanzen für die Bildung von Pflanzenerträgen zur Verfügung steht.

Die Zusammensetzung der »Trockenmasse« gemäß dem Verfahren der Erfindung ist auch bevorzugt für das Wachstum von Zwischenfrüchten geeignet. Die Förderung der Bodenaktivität zeigt ein Vergleichsversuch. Die biologische Aktivität im Boden wird durch die $CO_2$-Bodenatmung demonstriert, siehe Abbildung.

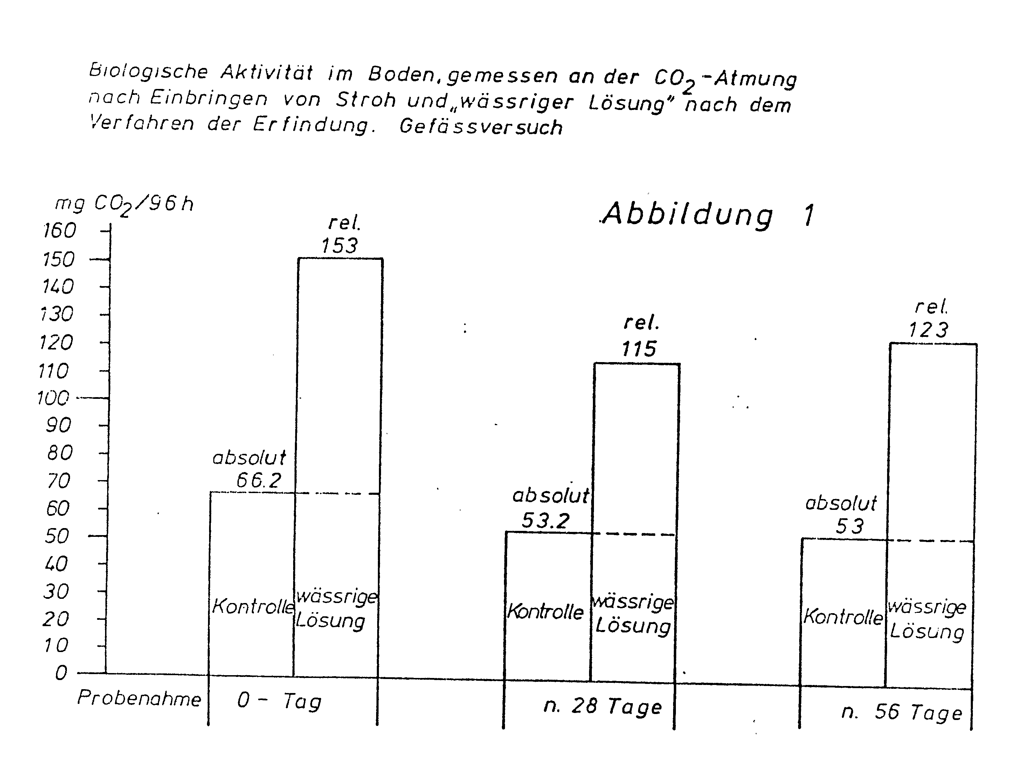

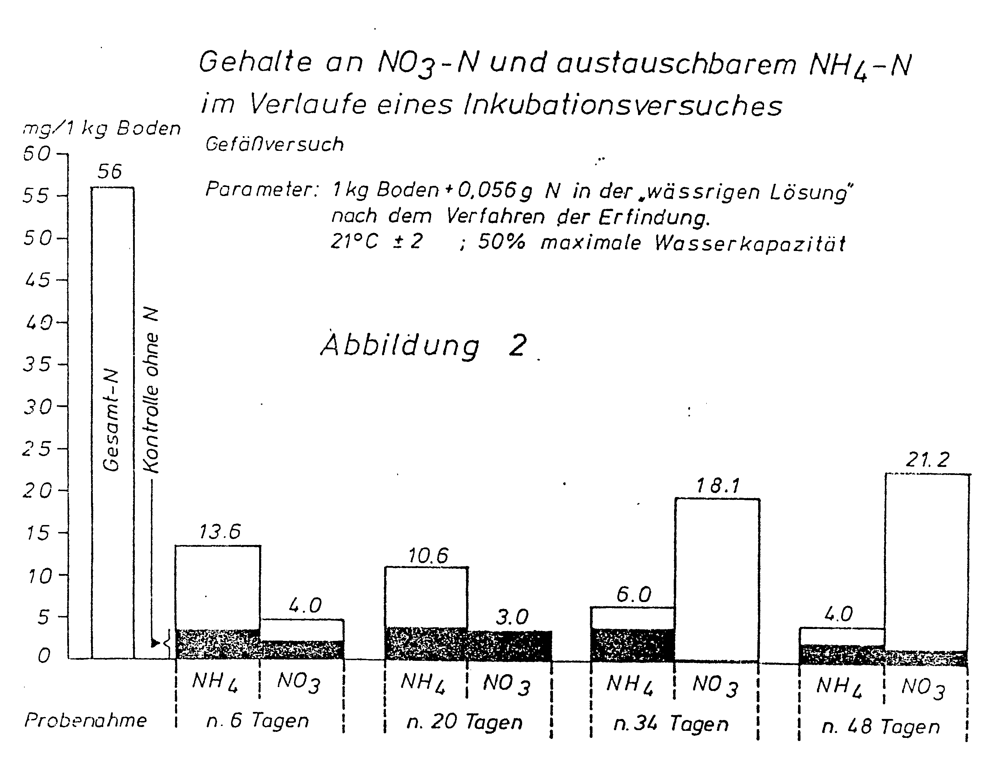

Es werden in 22-kg-Gefäßen nach Mitscherlich einem lehmigen Sandboden Getriedestroh in einer Größenordnung von 60 dt/ha unter Einarbeitung von 2 t/ha wäßrige Lösung gemäß dem Verfahren der Erfindung eines MPCV-Typs beigemischt. Die Kontrolle enthält einen mineralischen N-Ausgleich auf der Basis gleicher N-Mengen. Die Abbildung zeigt nach 0, 28, 56 Tagen für die mineralische N-Gabe als Kontrolle bei einer Bebrütung von Bodenproben absolute Werte mg $CO_2$ in 96 h von 66,2; 53,2; 53,0 mg $CO_2$. Dazu betragen für die wäßrige Lösung gemäß dem Verfahren der Erfindung die relativen Werte für $CO_2$ nach 0,28,56 Tagen 153, 115, 123, wobei die Kontrolle jeweils gleich 100% eingesetzt ist.

Dieser Versuch zeigt für die wäßrigen Lösung nach dem Verfahren der Erfindung die gesteigerte Bodenaktivität bzw. den verstärkten Stroh- und organischen Substanzabbau.

Ein Feldversuch auf einem umsatzträgen verlehmten Lössboden zur Strohverrottung zeigt das folgende Ergebnis, bei dem die Bodenproben mittels Stechzylinder entnommen wurden:

| | Strohtrockenmasse g/1000 cm³ Boden | |
| --- | --- | --- |
| | Ausgangsmenge Herbst | gefunden im Frühjahr |
| Stroheinarbeitung ohne wäßrige Lösung | 2,25 (100%) | 1,56 (100%) = 69% |
| Stroheinarbeitung nach dem Verfahren der Erfindung mit wäßriger Lösung | 2,25 (100%) | 1,04 (100%) = 46% |

5

Dieser Feldversuch unter den Bedingungen der Praxis, bei dem Bodenproben im Frühjahr nach der Strohzugabe im Herbst gezogen wurden, bestätigt, daß nach dem Verfahren gemäß der Erfindung eine Beschleunigung der Strohverrottung eintritt (Strohrotte).

Bei dem Ausgangswert von 2,25 g/1000 cm$^3$ Boden entsprechend 100% ergibt sich rechnerisch eine Steigerung der Strohrotte von 69% auf 46% Reststroh im Boden. Es wird also statt nur etwa $1/3$ bereits im Herbst über 50% nach dem Verfahren der Erfindung abgebaut.

Dieser Versuch demonstriert gleichzeitig, daß die »Strohdüngung« auch auf umsatzträgen Böden zu einem agrikulturchemischen Erfolg führt. Bei der jährlichen Wiederholung dieser Strohzugabe auf dem gleichen Standort werden aber auch durch die Kombination der Komponenten der Trockenmasse in der wäßrigen Lösung die Faktoren der Bodenaktivität gefördert und damit der Humusumsatz und die Bodenfruchtbarkeit verbessert. Einblick in die bodenbiologische Umsetzung des langsam, aber stetig wirkenden, organisch gebundenen Stickstoffs demonstriert ein Inkubationsversuch. Es wird die wäßrige Lösung nach dem Verfahren der Erfindung in der der Praxis entsprechenden Menge dem Boden durch Besprühen und Einarbeitung zugeführt. Danach wird über den Zeitraum von 48 Tagen der Gehalt an $NO_3-N$ und $NH_4-N$ unter konstanten Versuchsbedingungen festgestellt.

Der Versuch zeigt, daß von der Gesamtmenge N ein erheblicher Teil in kurzer Zeit in $NH_4-N$ übergeht und diese Menge in Abhängigkeit von der Zeit abnimmt. Dieser Versuch zeigt weiter, daß die Mineralisierung in $NO_3-N$ erst nach etwa 30 Tagen spürbar einsetzt und sich dann rasch steigert. Es ist also bereits nach einem Monat nach der Einarbeitung der wäßrigen Lösung gemäß dem Verfahren der Erfindung etwa 50% des organisch-gebundenen Stickstoffs in $NH_4-N$ umgewandelt durch die mikrobiellen Umsetzungsprozesse im Boden, so daß diese über die Mineralistation der Kulturpflanze als $NO_3-N$ neben dem mineralischen Stickstoff als Ergänzung zur Verfügung stehen. Dieser Versuch demonstriert auch, daß die organisch gebundene N-Menge als langsam wirkende, aber stetig fließenden N-Quelle während der Vegetationszeit zur Verfügung steht.

Diese Umsetzungsprozesse sind dadurch möglich, daß dem mikrobiellen Bodenleben die nicht-N-haltigen Stoffe aus der Trockenmasse der wäßrigen Lösung als »Bakteriennahrung« zur Verfügung stehen. Dieser Versuch demonstriert auch, daß die wäßrige Lösung gemäß dem Verfahren der Erfindung den agrikulturchemischen Effekt der Beschleunigung der Strohverrottung bietet, weil dafür die biologischen Voraussetzungen bestehen.

Es ist offenbar so, daß etwa 50% des teilweise organisch gebundenen Stickstoffs des Gemisches der Zusammensetzung der wäßrigen Lösung gemäß des Verfahrens der Erfindung bereits im Herbst als »N-Ausgleich« für die Verrottung des Strohes und anderer Ernterückstände, wie auch besonders zum Wachstum einer Zwischenfrucht, zur Verfügung gestellt wird.

Der organisch gebundene Stickstoff dieser Kombination von Stoffen, vorzugsweise von Naturstoffen, besitzt außerdem die Funktion, auch das weite C/N-Verhältnis der Ernterückstände insbesondere von Stroh auf das natürliche C/N-Verhältnis von etwa 10 bis 12 : 1 der organischen Bodensubstanz einzuengen.

Erst die genannten Effekte, die in der Ackerkrume durch das Verfahren gemäß der Erfindung gleichzeitig oder nacheinander bewirkt werden, wird insgesamt die Aufgabe der Erfindung, der Beschleunigung der Verrottung des Strohs und strohartiger Ernterückstände und die Verbesserung der Bodenfruchtbarkeit erzielt.

Nur durch diese Wirkungen ist es möglich, insbesondere die erhöhten Mengen an Stroh rasch der Verrottung zuzuführen und dabei die Bodenaktivität zu steigern im Sinne erhöhten Bodenfruchtbarkeit.

Gerade diese Aufgabe der Agrarbiologie darf nicht als »Einzelwirkung« beurteilt werden. Es ist vielmehr notwendig, durch das Verfahren gemäß der Erfindung die Voraussetzungen für einen »Dauererfolg« zu schaffen. Die wiederholte Anwendung der wäßrigen Lösung im Fruchtfolgeablauf in Verbindung mit einer ebenso wiederholten Zufuhr von Ernterückständen bieten die Grundlage dafür. Gerade darin ist der technische und agrikulturchemische »Gesamterfolg« des Verfahrens gemäß der Erfindung zu sehen.

Das Verfahren gemäß der Erfindung bietet auch den Vorteil, daß die Freisetzung einer Teilmenge des organisch gebundenen Stickstoffs im Herbst nach dem Ausbringen auf das in die obere Ackerkrume eingearbeiteten Strohs und strohiger Ernterückstände die Einbindung in die Verrottung dieser Substanzen unter Substanzbildung bewirkt.

Diese Stoffumsetzung und gegebenenfalls die wachsende Zwischenfrucht bewirken, daß dieser organisch gebundene Stickstoff im oberen Krumenbereich verbleibt und nicht in die Unterschicht ausgewaschen wird. Eine Verlagerung in den Unterboden könnte in Teilmengen nur in dem Ausnahmefall des Auftretens von hohen Niederschlägen auf leichten, sandigen Böden auftreten. Ein solcher Ausnahmefall verändert jedoch nicht den Regelfall des Verbleibens des organisch gebundenen Stickstoffs im Kreislauf in der oberen Bodenkrume.

Die Freisetzung des organisch gebundenen Stickstoffs der Zusammensetzung der wäßrigen Lösung gemäß dem Verfahren der Erfindung erfolgt fortlaufend während der gesamten Vegetationszeit. Es findet somit für diesen N-Anteil keine »Überdüngung« statt, und es kann je nach der Entzugsintensität des Pflanzenbestandes eine Ausnutzung dieser N-Form gemäß dem Verfahren der Erfindung zu 25—100% erfolgen in der Vegetationsperiode.

Das Verfahren gemäß der Erfindung stellt somit auch eine wertvolle Ergänzung der mineralischen Nährstoffdüngung dar.

**Patentansprüche**

1. Verfahren zur Beschleunigung der Verrottung von Stroh und anderen Ernterückständen sowie deren Inkorporierung in die organische Bodensubstanz bei gleichzeitiger Förderung der Bodenaktivität durch Verwendung langsam wirkender, organisch-gebundener N-Verbindungen in flüssiger Phase, dadurch gekennzeichnet, daß auf Ernterückstände und gegebenenfalls auf dem Acker belassenes, verteiltes Stroh, eine pumpfähige, wäßrige Lösung mit einem Gehalt an 10 bis 80 Gew.-% Trockenmasse und 20 bis 90 Gew.-% Wasser duch Bedüsen mittels Ausbringungsgerät als Spritzfilm oder Spritzschleier praktisch gleichmäßig verteilt auf den Ackerboden aufgebracht und zusammen durch Bodenbearbeitungsgeräte in die Ackerkrume eingearbeitet wird, oder erst nach der Einarbeitung der Ernterückstände und gegebenenfalls des auf dem Acker belassenen, verteilten Strohs, aufgebracht wird und in diese eindringt, wobei die Trockenmasse aus 60 bis 85 Gew.-% organische Masse und 15 bis 40 Gew.-% anorganischen Stoffen, und die organische Masse aus 1,5 bis 11,5 Gew.-% N in Form langsam, stetig verfügbaren, organisch gebundenen N-Verbindungen, insbesondere aus Betain, Aminosäuren, wie Glutaminsäure als N-Ausgleich zur Einengung des weiten C/N-Verhältnisses der zugeführten Ernterückstände, insbesondere Stroh, auf das C/N-Verhältnis der Bodensubstanzen von 10—12 : 1 durch einfaches oder wiederholtes Aufbringen der wäßrigen Lösung in den aufeinanderfolgenden Vegetationsperioden, besteht und aus 25 bis 50 Gew.-% N-freien, organischen Verbindungen als mikrobielle C- und Energie-Quelle, vorzugsweise organischen Säuren, Polysacchariden, Alkohole, Ketone, Carbonsäuren, Stärke, Mono-, Di-, Oligo-Sacchariden, oder Derivaten dieser Stoffe, gegebenenfalls als Gemische, besteht, sowie aus 1,5 bis 18,5 Gew.-% reduzierenden Zuckern als Glukose, und die anorganische Masse aus K-, Na-, Mg-, Ca- und P-Verbindungen als wasserlösliche Salze, wie als Sulfate, Nitrate, oder als organisch-gebundene Ionen, wie als Alginate, Glutamate, Salze der Monocarboxy-Cellulose, insbesondere als $KMgPO_4$, deren Hydrate, oder als $KCaPO_4$, K-Silikat, K-Karbonat, gegebenenfalls als Gemisch dieser Stoffe, besteht, zur Beschleunigung der Verrottung und zur Förderung der Bodenaktivität, und die wäßrige Lösung vor dem Ausbringen auf einen hohen pH-Wert für physiologisch saure Ackerböden, oder auf einen niedrigen pH-Wert für basisch reagierende Ackerböden eingestellt wird.

2. Verfahren nach Anspruch 1, dadurch gekennzeichnet, daß die pumpfähige, wäßrige Lösung aus durch Ausfällung oder Fermentation oder physikalisch-chemische Behandlung ganz oder teilweise entzuckerte Melasse besteht, die durch stufenweise Eindickung auf 50 bis 80 Gew.-% Trockenmasse konzentriert ist, oder die als Dünnschlempe bis 12 Gew.-%, oder als teilweise eingedickte Schlempe 13 bis 50 Gew.-% Trockenmasse enthält und die folgende Zusammensetzung aufweist, kalkuliert auf Basis 100 Gew.-% Trockenmasse:

| Analysen in den Stoffverbindungen | Gruppe A Typ LPCV*) | Gruppe B Typ MPCV*) | Gruppe C Typ HPCV*) |
| --- | --- | --- | --- |
| organische Masse | 60—70 | 65—85 | 65—85 |
| Gesamtstickstoff N nach Kjeldahl | 1,5—3,5 | 3,6—7 | 7,1—12,5 |
| davon $NH_4$—N | — | — | 3,5—4,5 |
| N-freie organische Verbindungen | 41—50 | 40—50 | 30—40 |
| Reduz. Zucker als Glukose | 10—18 | 4,5—10 | 4,5—11 |
| anorganische Mase als K-, Na-, Na-, P-, Ca-, Mg-Ionen | 30—40 | 15—35 | 15—35 |
| $K_2O$-Gehalt davon | 7,5—9 | 7—13,5 | 1,5—5 |
| $P_2O_5$ | 0,25—0,35 | 0,20—0,75 | 0,15—0,30 |

*) LPCV = Low Protein Containing Vinasse
*) MPCV = Middle Protein Containing Vinasse
*) HPVC = High Protein Containing Vinasse

7

3. Verfahren nach den Ansprüchen 1 bis 2, dadurch gekennzeichnet, daß das Aufsprühen der pumpfähigen, wäßrigen Lösung auf den Ackerboden (unmittelbar) nach der Ernte der Kulturpflanzen erfolgt.

4. Verfahren nach einem oder mehreren der Ansprüche 1 bis 3, dadurch gekennzeichnet, daß die auf die Bodenoberfläche aufzusprühende spezifische Menge (t/ha) der pumpfähigen, wäßrigen Lösung so eingestellt wird, daß diese für die der Verrottung der Ernterückstände folgende Saat eine Ergänzung der mineralischen N-, K-, Mg-, Na-, Ca- und P-Gabe darstellt.

5. Verfahren nach einem oder mehreren der Ansprüche 1 bis 5, dadurch gekennzeichnet, daß die wäßrige Lösung in einer solchen Menge auf den Ackerboden aufgebracht wird, daß der zur Verrottung der Ernte- und Strohrückstände notwendige N-Ausgleich 60 kg/ha N oder mehr beträgt.

6. Verfahren nach einem oder mehreren der Ansprüche 1 bis 6, dadurch gekennzeichnet, daß die wäßrige Lösung durch Zugabe von wasserlöslichen und/oder zitronensäurelöslichen und/oder citratlöslichen P-Komponenten auf einen $P_2O_5$-Gehalt bis etwa in Höhe des N-Gehaltes (Gew.-%) zur Förderung der mikrobiellen Aktivitäten eingestellt wird.

7. Verfahren nach einem oder mehreren der Ansprüche 1 bis 7, dadurch gekennzeichnet, daß die pumpfähige, wäßrige Lösung der organischen und anorganischen Stoffe als stabile Emulsion oder als instabile Dispersion in Festflüssigphase verwendet wird.

8. Verfahren nach einem oder mehreren der Ansprüche 1 bis 12, dadurch gekennzeichnet, daß die wäßrige Lösung der aufzudüsenden Wassermenge zur Vermischung zugegeben oder als Bypass der Beregnung oder Bewässerung kontinuierlich zudosiert wird.

9. Strohverrottung und Bodenverbesserungsmittel zur Beschleunigung der Verrottung von Ernterückständen und Stroh und Verengung des C/N-Verhältnisses im Ackerboden unter Förderung der Bodenaktivität durch Verwendung langsam wirkender, organisch-gebundener N-Verbindungen in flüssiger Phase nach Anspruch 1, dadurch gekennzeichnet, daß dieses aus einer pumpfähigen, wäßrigen Lösung oder stabilen Emulsion oder instabilen Dispersion mit einem Gehalt von 10 bis 80 Gew.-% Trockenmasse und 20 bis 90 Gew.-% Wasser besteht, dessen Trockenmasse aus 60 bis 85 Gew.-% organischer Masse und 15 bis 40 Gew.-% anorganischen Stoffen und die organische Masse aus 1,5 bis 11,5 Gew.-% N in Form langsam wirkender, stetig verfügbaren, organisch-gebundenen N-Verbindungen, die als N-Ausgleich zur Einengung des weiten C/N-Verhältnisses der Ernterückstände und Stroh im Ackerboden auf ein enges C/N-Verhältnis von 10 bis 12,1 geeignet sind, vorzugsweise in Form von Betain und Derivaten von Salzen der Aminosäuren wie Glutaminsäure und aus 25 bis 50 Gew.-% N-freien, organischen Verbindungen als mikrobielle C- und Energiequelle vorzugsweise in Form von organischen Säuren und Polysacchariden sowie aus 1,5 bis 18,5 Gew.-% reduzierenden Zuckern als Glucose und die anorganische Masse aus K-, Na-, Mg-, Ca- und P-Verbindungen besteht, zur Beschleunigung der Verrottung und zur Förderung der Bodenaktivitäten.

## Claims

1. Method to accelerate the rotting of straw and other crop residues and also the incorporation thereof into the organic soil substance with simultaneous promotion of the soil activity through the use of slow-acting organically combined N-compounds in liquid phase, characterized in that an aqueous solution, able to be pumped, with a content of 10 to 80%-wt. dry matter and 20 to 90%-wt. water is applied on crop residues and, if required, distributed straw left on the arable soil, by spraying by means of output equipment as spray film or spray mist practically evenly distributed onto the arable soil and is worked in together into the topsoil by earth working equipment, or is applied only after the working in of the crop residues and, if required, of the distributed straw left on the ground and penetrates the rein, whereby the dry matter consists of 60 to 85%-wt. organic matter and 15 to 40%-wt. inorganic substances and the organic matter consists of 1.5 to 11.5%-wt. N in the form of slowly, constantly available organically combined N-compounds, in particular betaine, amino acids, such as glutamic acid as N-balance for the concentration of the broad C/N ratio of the supplied crop residues, particularly straw, to the C/N ratio of the soil substances of 10—12 : 1 through single or repeated application of the aqueous solution in the successive vegetation periods, and consists of 25 to 50%-wt. N-free, organic compounds as microbial C- and energy-source, preferably organic acids, polysaccharides, alcohols, ketones, carboxylic acids, starch, mono-, di-, oligo-saccharides, or derivatives of these substances, if required as mixtures, and also consists of 1.5 to 18.5%-wt. reducing sugars as glucose, and the inorganic matter consists of K-, Na-, Mg-, Ca- and P-compounds as water-soluble salts, such as sulphates, nitrates, or as organically combined ions, such as alginates, glutamates, salts of mono-carboxy-cellulose, particularly as $KMgPO_4$, hydrates thereof, or as $KCaPO_4$, K-silicate, K-carbonate, if required as a mixture of these substances, to accelerate rotting and to promote soil activity, and prior to application the aqueous solution is set to a high pH-value for physiologically acid arable soils or to a low pH-value for basically reactive arable soils.

2. Method according to Claim 1, characterized in that the aqueous solution, which is able to be pumped, consists of molasses from which the sugar has been extracted in whole or in part through

# 0 090 091

precipitation or fermentation or physical/chemical treatment, which are concentrated by thickening in stages to 50 to 80%-wt. dry matter, or which as thin vinasse contains up to 12%-wt. dry matter or as partially thickened vinasse contains 13 to 50%-wt. dry matter and has the following composition, calculated on the basis of 100%-wt. dry matter:

| Analyses in the substance compounds | Group A Type LPCV*) | Group B Type MPCV*) | Group C Type HPCV*) |
|---|---|---|---|
| Organic matter | 60—70 | 65—85 | 65—85 |
| Total nitrogen N according to Kjeldahl | 1.5—3.5 | 3.6—7 | 7.1—12.5 |
| of which $NH_4$—N | — | — | 3.5—4.5 |
| N-free organic compounds | 41—50 | 40—50 | 30—40 |
| Reducingsugar as glucose | 10—18 | 4.5—10 | 4.5—11 |
| Inorganic matter as K-, Na-, Na-, P-, Ca-, Mg-ions | 30—40 | 15—35 | 15—35 |
| $K_2O$ content thereof | 7.5—9 | 7—13.5 | 1.5—5 |
| $P_2O_5$ | 0.25—0.35 | 0.20—0.75 | 0.15—0.30 |

*) LPCV = Low Protein Containing Vinasse
*) MPCV = Middle Protein Containing Vinasse
*) PHCV = High Protein Containing Vinasse

3. Method according to Claims 1 to 2, characterized in that the spraying of the aqueous solution, which is able to be pumped, onto the arable soil, takes place (immediately) after harvesting the cultivated plants.

4. Method according to one or more of Claims 1 to 3, characterized in that the specific quantity (t/ha) of the pumpable, aqueous solution which is to be sprayed onto the surface of the ground is set such that this represents a supplement to the mineral N-, K-, Mg-, Na-, Ca- and P-dose for the sowing following the rotting of the crop residues.

5. Method according to one or more of Claims 1 to 5, characterized in that the aqueous solution is applied onto the arable soil in a quantity such that the N-balance necessary for the rotting of the crop and straw residues amounts to 60 kg/ha N or more.

6. Method according to one or more of Claims 1 to 6, characterized in that through the addition of P-components soluble in water and/or soluble in citric acid and/or soluble in citrate, the aqueous solution is set to a $P_2O_5$ content up to approximately the level of the N-content (%-wt.) to promote microbial activity.

7. Method according one or more of Claims 1 to 7, characterized in that the pumpable, aqueous solution of the organic and inorganic substances is used as a stable emulsion or as unstable dispersion in solid-fluid phase.

8. Method according to one or more of Claims 1 to 12, characterized in that the aqueous solution is added to the quantity of water which is to be sprayed on for mixing, or is continuously added in doses as bypass to the irrigation or watering.

9. Straw-rotting and soil-improving agent to accelerate the rotting of crop residues and straw and concentration of the C/N-ratio in the arable soil with promotion of soil activity through the use of slow-acting, organically combined N-compounds in fluid phase according to Claim 1, characterized in that
this consists of a pumpable, aqueous solution or stable emulsion or unstable dispersion with a content of from 10 to 80%-wt. dry matter and 20 to 90%-wt. water,
the dry matter of which consists of 60 to 85%-wt. organic matter and 15 to 40%-wt. inorganic substances and the organic matter consists of 1.5 to 11.5%-wt. N in the form of slow-acting, constantly available, organically combined N-compounds, which are suitable as N-balance for the concentration of the broad C/N-ratio of the crop residues and straw in the arable soil to a narrow C/N-ratio of 10 to 12.1, preferably in the form of betaine and deratives of salts of amino acids such as glutamic acid and consisting of 25 to 50%-wt. N-free, organic compounds as microbial C- and energy source preferably in the form of organic acids and polysaccharides and also consisting of 1.5 to 18.5%-wt. reducing sugars

9

as glucose, and the inorganic matter consists of K-, Na-, Mg-, Ca- and P-compounds, for the acceleration of rotting and to promote soil activity.

**Revendications**

1. Procédé, pour accélérer la décomposition de la paille et d'autres résidus de récolte ainsi que leur incorporation dans la substance organique du sol avec un développement simultané de l'activité du sol en utilisant des solutions d'azote qui agissent lentement et liée organiquement sous forme liquide. Ca procédé est caractérisé, par le fait que l'on épand, sur les résidus de récolte et le cas échéant sur la paille dispersée laissée au champ, une solution aqueuse pompable avec une teneur de 10 à 80% du poids en matière sèche et 20% à 90% du poids en eau, en pulvérisant, au moyen d'un épandeur à buses sous forme d'une fine pellicule ou d'un voile réparti de façon régulière. On incorpore cet ensemble dans la terre arable à l'aide d'outils de préparation du sol ou seulement après enfouissage des résidus de récolte ou le cas échéant sur la paille dispersée laissée au champ. La matière sèche se compose de 60% à 85% du poids de matière organique et de 15 à 40% du poids d'éléments inorganiques.
La matière organique se compose de 1,5 à 11,5% du poids d'azote sous forme de combinaisons d'azote lié organiquement disponible de façon lente et constante, notamment de bétaïne, d'acides aminés comme par exemple l'acide glutamique servant comme compensateur d'azote pour diminuer le large rapport C/N des résidus de récolte apportés notamment la paille, à un rapport C/N de substances du sol de 10 à 12 : 1 par épandage simple ou répété de la solution aqueuse pendant des périodes de végétation ce succédant, et se compose et 25 à 50% du poids de combinaisons organiques sans azote comme les acides organiques préférentiels, sources microbiennes en carbone et en énergie, les polysaccharides les alcools, l'acétone, les acides décarbonés, les mono di et oligosaccharides, les dérivés de ces matières de même que les mélanges se compose de sucre réducteur de 1,5 à 18,5% du poids comme le glucose et la masse inorganique de liaison K, Na, Mg, Ca et P comme les sels solubles dans l'eau tels que le sulfate et le nitrate ou comme des ions organiquement liés tels que alginate, glutamate, les sels de cellulose monocarboxyde surtout que le Kmg P04 dont les hydrates ou comme Kca Po4 ou silicate de K, le carbonate de K, de même qu'un mélange de ces matières, afin d'accélérer la décomposition et d'améliorer l'activité du sol. Avant d'avoir établi un PH élévé pour les sols physiologiquement acide, solution aqueuse, ou poue un PH bas dans le cas de sol réagissant basiquement.

2. Procédé d'après le droit 1, caractérisé par le fait que la solution pompable aqueuse se compose de mélasse partiellement ou complètement désucrée par précipitée, fermentation ou traitement physico-chimique, laquelle est concentrée entre 50 à 80% du poids de matière sèche par réduction échelonnèe, ou qui contient comme vinasse claire jusqu'à 12% du poids de matière sèche, ou comme vinase en partie concentrée de 13 à 50% du poids de matière sèche, et montre la composition suivante, calculée sur la base 100% du poids de matière sèche.

| Analyse dans la »Substance« | Groupe A type LPCV | Groupe B type MPCV | Groupe C type HPCV |
|---|---|---|---|
| matière organique | 60—70 | 65—85 | 65—85 |
| Azote total N selon Kjeldahl | 1,5—3,5 | 3,6—7 | 7,1—12,5 |
| dont NH4 N | — | — | 3,5—4,5 |
| N combiné libre | 41—50 | 40—50 | 30—40 |
| Sucre réduit comme le glucose | 10—18 | 4,5—10 | 4,5—11 |
| matière minérale comme K, Na, Na, P, Ca, Mg, ions | 30—40 | 15—35 | 15—35 |
| dont contenu K20 | 7,5—9 | 7—13,5 | 1,5—5 |
| $P_2O_5$ | 0,25—0,35 | 0,20—0,75 | 0,15—0,30 |

— LPCV = vinasse à bosses protéïnes
— MPCV = vinasse à moyennes protéïnes
— HPCV = vinasse à hautes protéïnes

3. Procédé d'après les droits 1 à 2 caractérisé par le fait, que l'épandage de la solution aqueuse pompable s'effectue (immédiatement) après la récolte des plantes cultivées.

4. Procédé, d'après un ou plusieurs des droits 1 à 3, caractérisé par le fait que la quantité spécifique (t/ha) de la solution aqueuse à pulvériser sur la surface du sol, doit être accordée de telle manière que celle-ci présente pour la culture suivante une complémentation de l'apport minéral en N, K, Mg, Na, Ca et P pour la décomposition des résidus de récolte.

5. Procédé, d'après un ou plusieurs des droits 1 à 5, caractérisé par le fait que la solution aqueuse est épandue sur le sol arable d'une quantité telle, que la compensation d'azote pour la décomposition des résidus de récolte et de paille s'élève à 60 kg/ha d'azote ou plus.

6. Procédé, d'après un ou plusieurs des droits 1 à 6, caractérisé par le fait que la solution aqueuse soit accordée à une teneur $P_2O_5$ jusqu'à l'équivalent de la teneur d'azote (N) par adjonction de composants P soluble dans l'eau et/ou soluble dans l'acide citrique et/ou soluble en citrate pour améliorer l'activité microbienne du sol.

7. Procédé, d'après un ou plusieurs des droits 1 à 7, caractérisé par le fait que la solution aqueuse pompable des substances organiques et inorganiques s'utilise comme émulsion stable ou comme dispersion instable sous phase de liquide compact.

8. Procédé, d'après un ou plusieurs des droits 1 à 12, caractérisé par le fait que la solution aqueuse soit mélangée à la quantité d'eau à épandre ou qu'elle soit ajoutée comme »Bypass« de façon constante aux précipitations ou à l'irrigation.

9. Décomposition de la paille et moyen d'amélioration du sol pour accélérer la décomposition des résidus de récolte et de la paille ainsi que diminution du rapport C/N sur un sol arable avec amélioration de l'activité du sol par utilisation de liaison azote agissant directement et lié organiquement dans la phase liquide d'après le droit 1, tout cela est caractérisé par le fait que ceux ci se composent d'une solution aqueuse pompable, d'une émulsion stable ou d'une dispersion instable avec un contenu de 10 à 80% en poids matière sèche et 20 à 90% de poids en eau, dont la matière sèche se compose de 60 à 85% en poids de matière organique et 15 à 40% en poids de matière inorganique et la masse organique de 1,5 à 11,5% en poids d'azote sous forme de liaison azotée lié organiquement, constamment disponible agissant lentement qui en tant qu'équilibre azoté pour une réduction du large rapport C/N des résidus de récolte et de paille dans un sol arable, sont propres à un petit rapport C/M de 10 à 12, de préférence sous forme de bétaïne et de dérivés de sel des acides amminés comme des acides glutamiques et de 25 à 50% en poids de liaison organiques sans azote comme des sources en énergie et en carbone microbienne de préférence sous forme d'acide organique et de polysaccharides ainsi que de 1,5 à 18,5% en poids sucres réducteurs comme le glucose et la matière inorganique, de liaison K, Na, Mg, Ca et P, afin d'accélérer la décomposition et d'améliorer l'acitivité du sol.

Biologische Aktivität im Boden, gemessen an der $CO_2$-Atmung nach Einbringen von Stroh und „wässriger Lösung" nach dem Verfahren der Erfindung. Gefässversuch

Abbildung 1

mg $CO_2$/96 h

Gehalte an $NO_3$-N und austauschbarem $NH_4$-N im Verlaufe eines Inkubationsversuches

mg/1 kg Boden

Gefäßversuch

Parameter: 1 kg Boden + 0,056 g N in der „wässrigen Lösung" nach dem Verfahren der Erfindung.
21°C ± 2 ; 50% maximale Wasserkapazität

Abbildung 2

Gesamt-N

Kontrolle ohne N

56

13.6

4.0

10.6

3.0

6.0

18.1

4.0

21.2

$NH_4$ | $NO_3$   $NH_4$ | $NO_3$   $NH_4$ | $NO_3$   $NH_4$ | $NO_3$

Probenahme | n. 6 Tagen | n. 20 Tagen | n. 34 Tagen | n. 48 Tagen